# EUROPEAN PATENT APPLICATION

(11) **EP 0 866 315 A1**
(43) Date of publication of application: **23.09.1998**
(21) Application number: 98104704.6
(22) Date of filing: 16.03.1998
(51) Int. Cl.: G01D 11/24, B60K 26/02

(54) **Accelerator operational amount detecting apparatus**

(30) Priority: 19.03.1997 JP 65855/97
(71) Applicant: UNISIA JECS CORPORATION, Atsugi-shi Kanagawa-ken (JP)
(72) Inventor: Sato, Hisaaki, Atsugi-shi, Kanagawa-ken (JP); Mogi, Ikuo, Atsugi-shi, Kanagawa-ken (JP); Kumagai, Masato, Atsugi-shi, Kanagawa-ken (JP); Kudo, Munehiro, Atsugi-shi, Kanagawa-ken (JP); Kai, Keiichi, Atsugi-shi, Kanagawa-ken (JP)
(74) Representative: Grünecker, Kinkeldey, Stockmair & Schwanhäusser Anwaltssozietät

(57) **Abstract**

The present invention aims at providing an accelerator operational amount detecting apparatus, which can detect such an amount with high accuracy substantially without detection dispersion and deterioration with age.

To this end, there is integrated a sensor side rotary shaft with an input side rotary shaft, the sensor side rotary shaft having been conventionally separated from the input side rotary shaft which is rotated interlockedly with an operation of accelerator pedal. Thus, it becomes possible to reduce the fluctuation of sensor output which is due to low precision in attachment of the sensing part and inaccuracy in coaxiallity between the input side rotary shaft and the sensor side rotary shaft; and to suppress the deterioration with age of the sensor output, such as caused by discrepancy between the swing or movements of input side rotary shaft and sensor side rotary shaft, such as due to abrasion at various contacting points and at the bearing parts; resulting in that the operational amount of accelerator can be detected with high accuracy.

## Description

### Background of The Invention

### 1. Field of the Invention

The present invention relates to an improved technique for an accelerator operational amount detecting apparatus for detecting an operational amount of an accelerator effected by a driver who is driving such as vehicle.

### 2. Related Art of The Invention

In a conventional accelerator operational amount detecting apparatus, the operation of accelerator effected by a driver is transmitted to an arm, via: a drum which is rotated interlockedly with the accelerator pedal operation of the driver such as through a wire; a drum side rotary shaft which is rotated interlockedly with the drum; and a lever which is rotated interlockedly with the drum side rotary shaft. The arm is abutted to the lever and attached to a sensor side rotary shaft of a rotational angle sensor. Namely, the accelerator operational amount is detected by converting the accelerator pedal operation of the driver into the rotation of sensor side rotary shaft, and by detecting the rotational angle of the sensor side rotary shaft by means of a sensing part of the rotational angle sensor.

However, there has been such a possibility in the conventional accelerator operational amount detecting apparatus, as follows:

Namely, the output of the rotational angle sensor may include fluctuation such as caused by: low precision in attachment of the rotational angle sensor to a housing which accommodates therein the drum side rotary shaft and the lever; or inaccuracy in coaxiallity between the drum side rotary shaft and the sensor side rotary shaft.

Further, there is also a possibility of deterioration with age of the output of rotational angle sensor, if abrasion has occurred at contacting points of the lever and the arm abutted thereto.

### Summary of The Invention

The present invention has been carried out in view of the conventional problems as described above, and it is therefore an object of the present invention to provide an accelerator operational amount detecting apparatus, which can detect such an amount with high accuracy substantially without detection dispersion and deterioration with age, even with a simple and inexpensive constitution.

Therefore, the present invention provides an accelerator operational amount detecting apparatus, comprising: an input side rotary shaft which is rotated interlockedly with an operation of accelerator effected by a driver, a supporting body rotatably supporting the input side rotary shaft, a sensing part for sensing a relative rotational amount of the input side rotary shaft to the supporting body to thereby detect an operational amount of the accelerator, wherein the input side rotary shaft is integrated with a sensor side rotary shaft which generates a rotational amount of the input side rotary shaft relative to the supporting body, to thereby constitute an integrated rotary shaft.

According to such a constitution, the sensor side rotary shaft conventionally separated from the input side rotary shaft is integrated into the integrated rotary shaft, so that it becomes possible to reduce the fluctuation sensor output which is due to low precision in attachment of the sensing part and inaccuracy in coaxiallity between the input side rotary shaft and the sensor side rotary shaft, and to suppress the deterioration with age of the sensor output, such as caused by discrepancy between the swings or movement of input side rotary shaft and sensor side rotary shaft, such as due to abrasion at contacting points of lever and arm for connecting the sensor side rotary shaft and the input side rotary shaft, and at the bearing parts. Thus, the operational amount of accelerator can be detected with high accuracy.

The apparatus may further comprise a mechanism for maintaining the integrated rotary shaft at a predetermined position and returning the same thereto.

According to such a constitution, the accelerator is automatically returned to the predetermined position, when such operation is intended. Thus, there can be provided operational characteristics for accelerator accorded with the driver's intention, and there can be carried out such as simplification of a whole constitution of accelerator operation system, enhancement of freedom in design, and improvement of performance for assembling work.

The mechanism for maintaining the integrated rotary shaft at the predetermined position and returning the same thereto may be constituted to utilize an elastic force of an elastic body disposed between the integrated rotary shaft and the supporting body.

According to such a constitution, there can be carried out such as simplification of constitution.

The elastic body may be utilized such that a frictional resistance between the integrated rotary shaft and the supporting body becomes larger when the integrated rotary shaft is rotated in a stepping forward direction of accelerator, and becomes smaller when the integrated rotary shaft is rotated in a returning direction of accelerator.

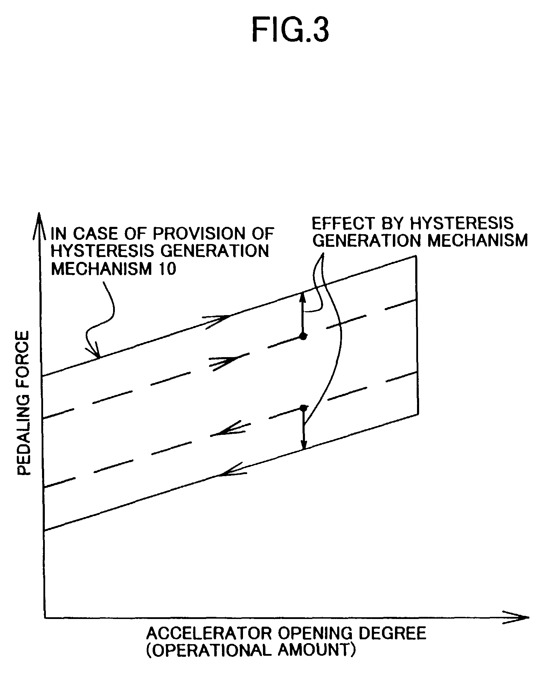

According to such a constitution, there can be carried out simplification of constitution, since the elastic body, which serves to maintain the integrated rotary shaft at the predetermined position and returning the same thereto, is utilized to attain such a function that a frictional resistance between the integrated rotary shaft and the supporting body becomes larger when the integrated rotary shaft is rotated in a stepping forward direction of accelerator, and becomes smaller when the integrated rotary shaft is rotated in a returning direction of accelerator. Meanwhile, there can be provided a pedaling force characteristic for the accelerator relative to an opening degree of accelerator (i.e., operational amount) as represented by a dotted line in FIG. 3, if the frictional resistance between the integrated rotary shaft and the supporting body is made larger when the integrated rotary shaft is rotated in a stepping forward direction of accelerator, and is made smaller when the integrated rotary shaft is rotated in a returning direction of accelerator. Thus, it becomes possible to stabilize the opening degree by demanding a larger pedaling force when stepping forward the accelerator pedal, and to improve the response ability by demanding a smaller pedaling force when returning the accelerator pedal.

The apparatus may further comprise a hysteresis generation mechanism for rendering a frictional resistance between the integrated rotary shaft and the supporting body, to be larger when the integrated rotary shaft is rotated in a stepping forward direction of accelerator, and to be smaller when the integrated rotary shaft is rotated in a returning direction of accelerator.

According to such a constitution, there can be provided a pedaling force characteristic for the accelerator relative to an opening degree of accelerator (i.e., operational amount) as represented by a solid line in FIG. 3, so that it becomes possible to further stabilize the opening degree by demanding a larger pedaling force when stepping forward the accelerator pedal, and to further improve the response ability by demanding a smaller pedaling force when returning the accelerator pedal.

The mechanism for maintaining the integrated rotary shaft at the predetermined position and returning the same thereto may be disposed at one side of the integrated rotary shaft, the hysteresis generation mechanism may be disposed at the other side of the integrated rotary shaft, and the sensing part may be disposed between the mechanisms.

According to such a constitution, such as bolt for supporting the hysteresis generation mechanism onto the integrated rotary shaft can be fastened at the end portion of the integrated rotary shaft, so that the performance of assemble and disassemble can be largely improved and the whole of apparatus is made smaller and lighter, promoting cost reduction in products. Further, the sensing part can be disposed in the vicinity of the bearing part for the integrated rotary shaft to be supported by the supporting body, so that the influence such as due to shaft swing can be eliminated to the utmost, resulting in detection of operational amount of accelerator with higher accuracy.

The mechanism for maintaining the integrated rotary shaft at the predetermined position and returning the same thereto may be disposed at one side of the integrated rotary shaft, the sensing part may be disposed at the other side of the integrated rotary shaft, and the hysteresis generation mechanism may be disposed between the mechanism and the sensing part.

According to such a constitution, there can be easily performed such as output adjustment and replacement of the sensing part. Further, the hysteresis generation mechanism is to be disposed in the vicinity of a bearing part for the integrated rotary shaft supported by the supporting body, so that such as swing of shaft onto the hysteresis generation mechanism can be eliminated to the utmost so as to thereby duly generate and eliminate a frictional resistance, to thereby assuredly avoid such as blockage or choking of accelerator. In addition, the frictional resistance generating part of the hysteresis generation mechanism between the integrated rotary shaft and the supporting body can be disposed within the supporting body, so that, for example, a cover at the supporting body end at the sensing part disposed side can be separated from the integrated rotary shaft. Thus, it becomes possible to assuredly prevent an influence such as due to deformation of the cover from exerting onto the integrated rotary shaft even when the cover is impacted such as by external load, resulting in considerably improved reliability of the apparatus.

Further objects and details of the present invention will become more apparent from the following description of preferred embodiments when read in conjunction with the accompanying drawings.

### Brief Explanation of the Drawings

FIG. 1 is a sectional view of a whole constitution of a first embodiment according to the present invention;

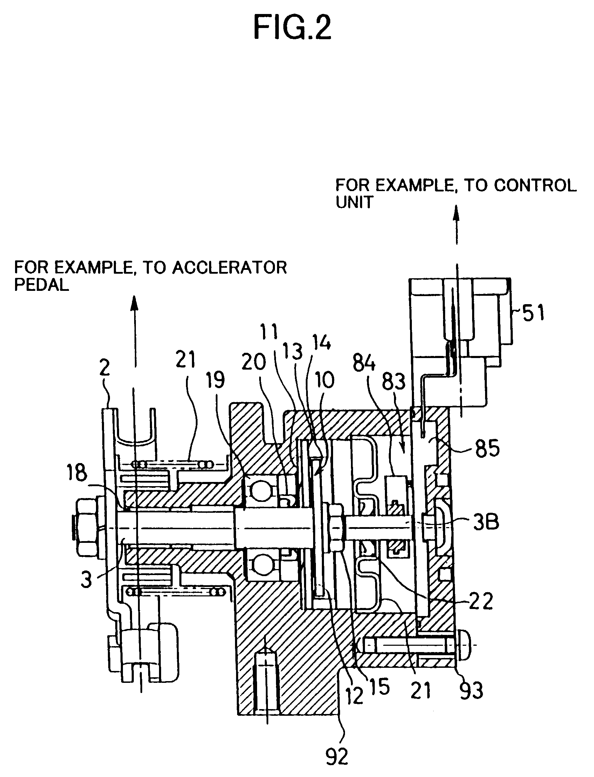

FIG. 2 is a sectional view of a whole constitution of a second embodiment according to the present invention;
FIG. 3 is a diagram showing a relationship between an opening degree of accelerator and a pedaling force, in case of provision of hysteresis generation mechanism;
FIG. 4 is a view showing an example of wave washer; and
FIG. 5 is an enlarged partial view for explaining how to support a housing of plate 13.

### Preferred Embodiment

There will be described the embodiments according to the present invention, with reference to the accompanying drawings.

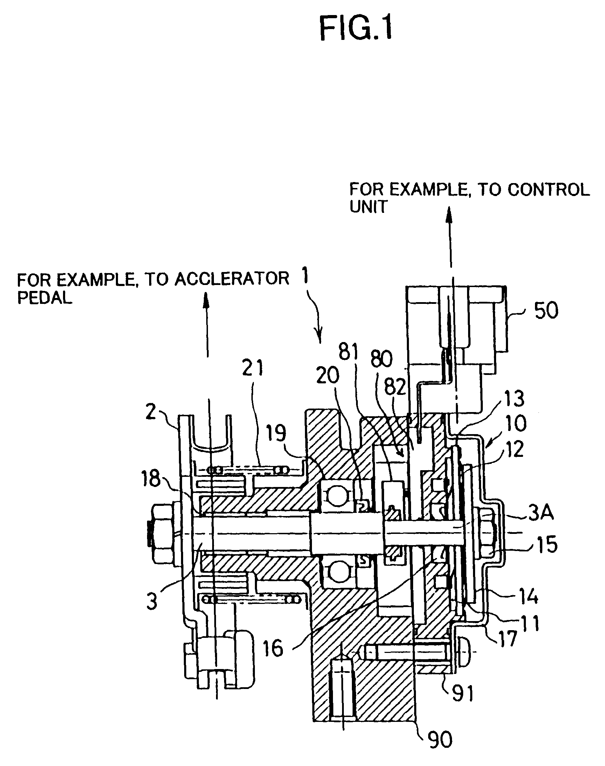

As shown in FIG. 1, reference numeral 1 designates an accelerator operational amount detecting apparatus which detects an operational amount of an accelerator effected by a driver who is driving such as vehicle. The apparatus 1 is constituted to include: a drum 2 to be rotated interlockedly with an operation of accelerator pedal by the driver such as via wire, and a drum side rotary shaft 3 to be rotated interlockedly with the drum 2; in which the rotary shaft 3 has an extension part 3A which is extended to penetrate a sensing part 80 of a rotational angle sensor 50.

Namely, the sensing part 80 is constituted to include a rotary brush part 81, and a base plate part 82 for sensing a rotational angle position of the rotary brush part 81. The extension part 3A penetrates the sensing part 80, and is then connected with a hysteresis generation mechanism part 10.

The operation of accelerator pedal by the driver is converted into rotation of the rotary brush part 81 via rotary shaft 3 and extension part 3A, so that the operational amount of accelerator can be detected by detecting a relative rotational angle of the rotary brush part 81 to the base plate part 82.

The hysteresis generation mechanism part 10 corresponds to a hysteresis generation mechanism according to the present invention.

The hysteresis generation mechanism part 10 is provided to attain a pedaling force characteristic for the accelerator relative to an opening degree of accelerator (i.e., operational amount) as shown in FIG. 3, such that the opening degree is stabilized by demanding a larger pedaling force when stepping forward the accelerator pedal, and the response ability is improved by demanding a smaller pedaling force when returning the accelerator pedal.

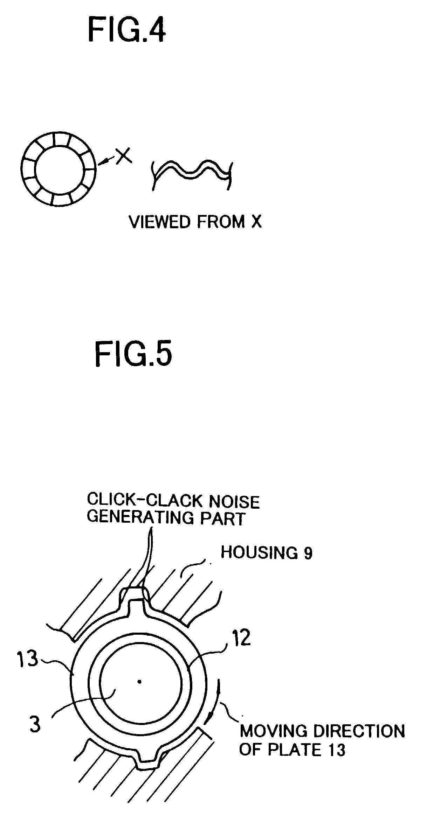

Concretely, in this embodiment, there is provided a wave washer 11 fitted onto a periphery of the extension part 3A in a manner independent from the rotation of extension part 3A which penetratingly extends through a cover 91 fixed to a housing 90 (corresponding to a supporting body for rotatably supporting the rotary shaft). The wave washer 11 is disposed adjacent to the cover 91, and comprises an elastic member having such a shape shown in FIG. 4, to thereby affect an elastic force at least in an axial direction of the rotary shaft 3.

On the opposite side of the wave washer 11 which does not face to the cover 91, a plate 13 having a slide member 12 is fitted onto the periphery of the extension part 3A independently from its rotation. This plate 13 is restricted with respect to its rotation in the rotational direction of the extension part 3A, and is supported by the cover 91.

Disposed adjacent to the slide member 12 of plate 13 is a rotary plate 14 which is fixed to an end of the extension part 3A such as by means of bolt 15.

According to the hysteresis generation mechanism 10 having such a constitution as described above, when the rotary shaft 3 is rotated in response to the stepping forward operation of the driver, there are generated a force for returning the rotary shaft 3 toward its initial position, and a force for axially shifting the rotary shaft 3 from the housing 90 toward the drum 2, both forces being corresponded to a stretched amount of a return spring 21 for maintaining the rotary shaft 3 at its initial position (the spring 21 corresponds to an elastic body according to the present invention; and such as this return spring 21 and the drum 2 constitute a mechanism for maintaining the integrated rotary shaft according to the present invention at a predetermined position and returning the same thereto). Thus, the rotary plate 14 fixed to the rotary shaft 3 is rotatingly shifted toward the drum 2 by a slight amount in an axial direction, so that the rotary plate 14 axially presses the slide member 12, plate 13 and wave washer 11. As a result, between the rotary plate 14 and slide member 12, there are generated, in a superimposed manner, a frictional force corresponding to a rotated amount of rotary shaft 3 (i.e., a stepped forward amount of accelerator, in other words, a stretched amount of the return spring 21), and another frictional force generated by a reaction force of the wave washer 11. Namely, it becomes possible to demand a relatively large stepping-forward force when stepping forward the accelerator, as shown in FIG. 3.

Contrary, when the rotary shaft 3 is rotated in the returning direction in response to the returning operation of accelerator by the driver, the return spring 21 generates a force for axially shifting the rotary shaft 3 toward the rotary plate 14 side (i.e., in a direction moving away from the drum 2), and the wave washer 11 generates another force for shifting the rotary shaft 3 toward the rotary plate 14 side. Thus, the rotary shaft 3 is urged by a relatively large force to be shifted in a direction moving away from the drum 2. As a result, even when the rotational angle of the rotary shaft 3 is same with that in case of stepping forward of accelerator, the axial position of rotary shaft 3 (rotary plate 14) is further distant from the drum 2 than the case of stepping forward of accelerator (and than the case of absence of rotary plate 14, slide member 12, plate 13, and wave washer 11). Thus, even when the opening degree is same with the case of stepping forward, the frictional force between the rotary plate 14 and slide member 12, which is to be generated by the elastic forces of return spring 21 and wave washer 11, is decreased to such an extent that the distance between the rotary plate 14 and slide member 12 is increased, or is not generated at all. Namely, it becomes possible to demand a relatively small pedaling force when returning the accelerator, as shown in FIG. 3.

There are provided a lip seal 16 for preventing foreign matters (such as particle dust, rubbish, water) from entering the sensing part 80, and a cover 17 for the hysteresis generation mechanism 10 for the same purpose. Further, there are provided bearings 18 and 19 for rotatably supporting the rotary shaft 3, and a lip seal 20 for preventing entrance of foreign matters from the drum 2 side.

As described above, according to this embodiment, a sensor side rotary shaft conventionally separated from the rotary shaft 3 is integrated into this shaft 3, so that it becomes possible to reduce the fluctuation of sensor output which is due to low precision in attachment of the sensing part and inaccuracy in coaxiallity between the rotary shaft 3 and a sensor side rotary shaft, and to suppress the deterioration with age of the sensor output, such as caused by discrepancy between the swing or movement of rotary shaft 3 and a sensor side rotary shaft, such as due to abrasion at contacting points of lever and arm, and at the bearing parts. Thus, the operational amount of accelerator can be detected with high accuracy.

Further, the rotary shaft 3 and the sensor side rotary shaft are integrated with each other, the hysteresis generation mechanism 10 is disposed outside of the sensing part 80, and the fastening bolt 15 is prepared to be fastened at the end of the extension part 3A, so that the performance of assemble and disassemble can be largely improved and the whole of apparatus is made smaller and lighter, promoting cost reduction in products.

In this embodiment, the sensing part 80 is constituted to be disposed in the vicinity of the ball bearing (bearing 19), so that the influence such as due to shaft swing can be eliminated to the utmost, resulting in detection of operational amount of accelerator with as high accuracy as possible.

Further, in the conventional hysteresis generation mechanism, the plate 13 and slide member 12 are constituted to be held by a housing 9 formed of metal such as aluminum (see FIG. 5), so that there has been generated click-clack noise due to collision between the plate and housing 9 whenever the accelerator is turned ON/OFF. However, according to the embodiment of the present invention, since the plate 13 can be held by the cover 91 such as made of resin (i.e., this cover is not a housing so that its strength is not required to be so high, so that molding such as by resin is possible), the click-clack noise in case of the conventional can be assuredly suppressed.

There will be explained hereinafter a second embodiment of the present invention.

In the following description, similar or corresponding elements as shown in FIG. 1 are denoted by the same reference numerals.

In the second embodiment according to the present invention, the rotary shaft 3, which is connected to the drum 2 rotated interlockedly with an operation of accelerator pedal by the driver, is constituted to have an extension part 3B which is extended up to a sensing part 83 of a rotational angle sensor 51.

Namely, the extension part 3B is mounted with a rotary brush part 84 at its end, and a base plate 85 is disposed on a cover 93 to oppose to the rotary brush part 84 to thereby detect a rotational angle position of the rotary brush part 84. The operation of accelerator pedal by the driver is converted into rotation of the rotary brush part 84 via rotary shaft 3 and extension part 3B, so that the operational amount of accelerator can be detected by detecting a relative rotational angle of the rotary brush part 84 to the base plate part 85.

In this embodiment, the hysteresis generation mechanism 10 is disposed on and coaxially with the rotary shaft 3 (extension part 3B) and at a position more inside of a housing 92 than the rotary brush part 84. Namely, it is constituted to hold such as slide member 12, plate 13, and wave washer 11 between the rotary plate 14 and the inner wall of the housing 92, by fixing the rotary plate 14 by means of the bolt 15 which is fastened onto a screw thread provided on an outer periphery of the extension part 3B.

The hysteresis generation mechanism 10 in this embodiment can exhibit functions and effects identical with what are explained in the embodiment in FIG. 1. For example, there can be provided the pedaling force characteristic for the accelerator relative to an opening degree of accelerator (i.e., operational amount) as shown in FIG. 3, such that the opening degree is stabilized by demanding a larger pedaling force when stepping forward the accelerator pedal, and the response ability is improved by demanding a smaller pedaling force when returning the accelerator pedal

Further provided in this embodiment are a cover 21 and a lip seal 22 for preventing foreign matters (such as abrasion particles) generated in the hysteresis generation mechanism 10 from entering the sensing part 83 and a cover 23, and the lip seal 20 for preventing foreign matters (such as particle dust, rubbish, water) from entering the hysteresis generation mechanism 10. Further, there are provided bearings 18 and 19 for rotatably supporting the rotary shaft 3.

According to this embodiment having the aforementioned constitution, a sensor side rotary shaft conventionally separated from the rotary shaft 3 is integrated into this shaft 3, so that it becomes possible to reduce the fluctuation of sensor output which is due to low precision in attachment of the sensing part and inaccuracy in coaxiallity between the rotary shaft 3 and a sensor side rotary shaft, and to suppress the deterioration with age of the sensor output, such as caused by discrepancy between the swing or movement of rotary shaft 3 and a sensor side rotary shaft, such as due to abrasion at contacting points of lever and arm, and at the bearing parts. Thus, the operational amount of accelerator can be detected with high accuracy.

Further, the sensing part 83 is disposed outside the hysteresis generation mechanism 10, so that such as output (centering) adjustment and replacement of the sensing part can be facilitated, while enabling the detection of operational amount of accelerator with high accuracy by virtue of integration of sensor side rotary shaft 6 and rotary shaft 3. As a result, the hysteresis generation mechanism 10 is disposed in the vicinity of the ball bearing (bearing 19), so that the influence such as due to shaft swing onto the hysteresis generation mechanism 10 can be eliminated to the utmost, to thereby assuredly avoid such as blockage or choking of accelerator.

In addition, according to this embodiment, the rotary shaft 3 is spaced from the cover 93 (i.e.,the rotary shaft 3 is assuredly protected by the cover 93), so that it becomes possible to assuredly prevent an influence such as due to deformation of the cover 93 from exerting onto the rotary shaft 3 even when the cover 93 is impacted such as by external load. Thus, the reliability of the apparatus can be considerably improved. Namely, the rotary shaft 3 is not affected such as by the deformation of cover 93, so that such as swing of shaft is restricted. Thus, the reliability for the precision in sensor output can be excellently maintained, while assuredly avoiding such a possibility that an failure occurs in the hysteresis generation mechanism to thereby cause defective returning of the accelerator.

Although the slide member 12 has been explained as being disposed on the plate 13 side in the above embodiments, the present invention is not restricted thereto. For example, the slide member 12 may be disposed at the rotary plate 14 side.

Further, such as housings 90, 92, and cover 93 may be constituted such as of resin, instead of metal. The bearing 19 is not limited to a ball bearing, and undoubtedly can be substituted such as by plane bearing, needle bearing, roller bearing and other suitable ones.

## Claims

1. An accelerator operational amount detecting apparatus, comprising:
an input side rotary shaft which is rotated interlockedly with an operation of accelerator effected by a driver,
a supporting body rotatably supporting said input side rotary shaft,
a sensing part for sensing a relative rotational amount of said input side rotary shaft to said supporting body to thereby detect an operational amount of the accelerator,
wherein
said input side rotary shaft is integrated with a sensor side rotary shaft which generates a rotational amount of said input side rotary shaft relative to said supporting body, to thereby constitute an integrated rotary shaft.

2. An accelerator operational amount detecting apparatus of claim 1, further comprising a mechanism for maintaining said integrated rotary shaft at a predetermined position and returning the same thereto.

3. An accelerator operational amount detecting apparatus of claim 2, wherein said mechanism for maintaining said integrated rotary shaft at the predetermined position and returning the same thereto utilizes an elastic force of an elastic body disposed between said integrated rotary shaft and said supporting body.

4. An accelerator operational amount detecting apparatus of claim 3, wherein said elastic body is utilized such that a frictional resistance between said integrated rotary shaft and said supporting body becomes larger when said integrated rotary shaft is rotated in a stepping forward direction of accelerator, and becomes smaller when said integrated rotary shaft is rotated in a returning direction of accelerator.

5. An accelerator operational amount detecting apparatus of claim 4, further comprising a hysteresis generation mechanism for rendering a frictional resistance between said integrated rotary shaft and said supporting body, to be larger when said integrated rotary shaft is rotated in a stepping forward direction of accelerator, and to be smaller when said integrated rotary shaft is rotated in a returning direction of accelerator.

6. An accelerator operational amount detecting apparatus of claim 5, wherein
said mechanism for maintaining said integrated rotary shaft at the predetermined position and returning the same thereto is disposed at one side of said integrated rotary shaft,
said hysteresis generation mechanism is disposed at the other side of said integrated rotary shaft, and
said sensing part is disposed between said mechanisms.

7. An accelerator operational amount detecting apparatus of claim 5, wherein
said mechanism for maintaining said integrated rotary shaft at the predetermined position and returning the same thereto is disposed at one side of said integrated rotary shaft,
said sensing part is disposed at the other side of said integrated rotary shaft, and
said hysteresis generation mechanism is disposed between said mechanism and said sensing part.
